# EUROPEAN PATENT APPLICATION

(11) **EP 3 444 882 A1**
(43) Date of publication of application: **20.02.2019**
(21) Application number: 17001391.6
(22) Date of filing: 15.08.2017
(51) Int. Cl.: H01M 4/88, H01M 4/90, H01M 4/96, H01M 4/86, H01M 8/1018

(54) **NON-NOBLE METAL OXYGEN REDUCTION CATALYST PREPARED USING NON-POROUS POROSITY PRECURSORS**

(71) Applicant: Paul Scherrer Institut, 5232 Villigen PSI (CH)
(72) Inventor: Herranz, Juan, CH-8008 Zürich (CH); Schmidt, Thomas Justus, CH-5314 Kleindöttingen (CH)
(74) Representative: Fischer, Michael

(57) **Abstract**

The present invention disclose a method for preparing non-noble metal catalysts (NNMCs) using non-porous, thermally decomposable chemicals as the catalysts' porosity precursors. The composition of these and other precursors are detailed below, along with the variety of conditions involved in the catalysts' manufacture.

In one aspect, the individual precursors comprise:
a) a non-porous salt that thermally decomposes upon heat-treatment, releasing gas and acting as the porosity precursor;
b) a nitrogen- and carbon-containing organic compound that undergoes structural changes upon heat-treatment, therefore acting as the N- and C-precursor; and
c) a non-noble metal precursor.

In another aspect, the synthesis method comprises:
a) the mixing of the precursors;
b) a first heat-treatment step;
c) an acid-washing step to remove possible side phases; and
d) a second heat treatment step that increases the material's ORR-activity and yields the final catalyst.

## Description

The present invention relates to a catalyst based on non-noble metals and that can be used to accelerate the kinetics of the oxygen reduction reaction, which is of pivotal importance to low-temperature fuel cells and metal-air batteries. More specifically, this disclosure deals with the initial catalyst precursors and synthesis methods used to prepare these non-noble metal catalysts, as well as with the use of the final materials themselves.

Polymer electrolyte fuel cells (PEFCs) are environmentally benign, highly-efficient energy conversion devices excellently suited, e.g., for the propulsion of electric vehicles with extended driving ranges. Despite these advantageous features, their widespread commercialization has been deterred by their excessive cost, which is partially related to the expensive Pt-based catalysts used to accelerate the kinetics of the hydrogen oxidation and oxygen reduction reactions (HOR and ORR, respectively) taking place inside the cell.

Specifically, the sluggish kinetics of the ORR on Pt translate into PEFC-cathode loadings of ≈ 0.3 mgₚₜ·cm⁻², accounting for ≈ 50 % of the PEFC-stack cost and that need to be decreased ≈ 3-to-5-fold in order to render this technology cost-competitive.

An alternative approach to reach these cost-reduction requirements while simultaneously minimizing the reliance of this technology on volatile noble metal prices is the substitution of Pt-based ORR-catalysts with alternative, abundant materials. Such non-noble metal catalysts (NNMCs) have been studied since the mid-1960s, when it was first discovered that the reduction of oxygen in alkaline electrolytes can be catalyzed by Co-phthalocyanine - a compound in which cobalt is coordinated by four pyrrolic nitrogen groups embedded in a macrocyclic carbon backbone. Subsequent developments led to non-noble metal catalyst synthesis approaches in which these macrocycles were substituted with separate metal-, nitrogen- and carbon-precursors brought together in a heat-treatment step.

More recently, the discovery that the catalysts' microporosity plays a determining role in their ORR-activity resulted in a novel preparation route in which a highly (micro)porous carbon black is mixed with thermally decomposable carbon-, metal- and nitrogen-precursors (e.g., 1,10-phenanthroline and Fe-acetate, along with NH₃ as the heat-treatment atmosphere). Chiefly, this approach led to a major breakthrough in catalyst performance, showcasing for the first time a non-noble metal catalyst as ORR-active as state-of-the-art Pt-based materials.

In a subsequent refinement of the above synthesis, the highly-microporous carbon black was substituted with a metalorganic framework (MOF) with an even larger (micro)porosity. In this case, the thermal decomposition of the MOF in the synthesis' heat-treatment step implies that this component acts both as a porosity-precursor and as the catalyst support, since the MOF's organic backbone does not fully decompose and instead yields a carbonaceous, high surface area material. Most importantly, the resulting non-noble metal catalyst displays further-improved ORR-activity and high current density performance, which has motivated a surge of interest in the use of MOFs as catalyst precursors.

Despite their positive impact on the catalyst performance, MOFs remain specialty chemicals with a high price. Specifically considering the Zn-based, Basolite® MOF used in the above studies (sold by ≈ US$ 9 g⁻¹) along with the relatively large amount of MOF used in the initial precursor mixture (≈ 50-80 % of the initial mass) and the low catalyst yields attained in this synthesis (≈ 20-50 %), the final catalyst cost on the exclusive base of the MOF's price should be in the order of ≈ US$ 9-36 g⁻¹. Within this relatively wide span, the higher estimate surpasses the current price of Pt (≈ US$ 30 g⁻¹), highlighting the possibility that non-noble metal catalysts synthesized using MOFs may not be cost-competitive with respect to state-of-the-art Pt-based materials.

Therefore, it is the objective of the present invention to provide a method for the production of non-noble metal oxygen reduction catalyst using an alternative synthesis approach that not only leads to sufficiently active materials, but also does so without relying on the use of expensive chemicals, therefore yielding cost-competitive non-noble metal catalysts.

This objective is achieved according to the present invention by a method according to claim 1. This method for preparing non-ncble metal catalysts (NNMCs) relies on using non-porous, thermally decomposable chemicals as the catalysts' porosity precursors. The composition of these and other precursors are detailed below, along with the variety of conditions involved in the catalysts' manufacture.

In one aspect, the individual precursors comprise:
(a) a non-porous salt that thermally decomposes upon heat-treatment, releasing gas and acting as the porosity precursor;
(b) a nitrogen- and carbon-containing organic compound that undergoes structural changes upon heat-treatment, therefore acting as the N- and C-precursor; and
(c) a non-noble metal precursor.

In another aspect, the synthesis method comprises:
(a) the mixing of the precursors;
(b) a first heat-treatment step;
(c) an acid-washing step to remove possible side phases; and
(d) a second heat treatment step that increases the material's ORR-activity and yields the final catalyst.

In any of the preceding embodiments, the non-porous salt acting as a porosity precursor can be a (bi)carbonate [Meₓ(H)CO₃] or a (bi)oxalate [Meₓ(H)C₂O₄], whereby the counter-cation (Me) corresponds to (an) alkali-, alkali earth- or transition-metal.

In any of the preceding embodiments, the porosity precursor is a non-porous chemical, i.e., its initial surface area is << 10 m² g⁻¹.

In any of the preceding embodiments, the nitrogen- and carbon-precursor can be polyacrylonitrile, polyaniline, cyanamide, phenanthroline, or melamine.

In any of the preceding embodiments, the non-noble metal is iron, cobalt, nickel, chromium, copper or manganese (and combinations thereof), and is delivered in the form of an acetate, oxalate, oxide, sulfate, porphyrin, phthalocyanine, or metal-phenanthroline complex.

In any of the preceding embodiments, the porosity precursor and the nitrogen- / carbon-precursor are mixed in weight ratios ranging between 30-to-10 and 10-to-90.

In any of the preceding embodiments, the mass of the metal precursor is such that the precursors' mixture has an initial metal content ranging between 0.01 and 10 wt. %.

In any of the preceding embodiments, the precursors' mixing includes planetary ball milling, either of the dry precursors, or following their preliminary mixing in a solvent solution and drying.

In any of the preceding embodiments, the precursors' premixing in a solvent involves the use of water, ethanol, methanol, n-propanol, acetone, dimethylformamide Or dimethysulfoxide (or combinations thereof).

In any of the preceding embodiments, the first heat treatment step is performed at a temperature ranging between 500 and 1100°C, and under an atmosphere of inert or reactive gas (e.g. Ar or N₂, vs. NH₃, H₂ or CO₂, respectively).

In any of the preceding embodiments, the acid washing step is performed in an aqueous solution of an acid like HClO₄, H₂SO₄, HNO₃ or HCl (or combinations thereof), and in concentrations ranging between 0.01 and 5 M.

In any of the preceding embodiments, the second heat treatment step is performed at a temperature ranging between 500 and 1100°C, and under an atmosphere of inert or reactive gas (e.g. Ar or N₂, vs. NH₃, H₂ or CO₂, respectively).

Furthermore, in any of the preceding embodiments the following measures can be applied alone or in combination of one or more of the remaining measures:
i) the acid used for washing the catalyst is HClO₄, HNO₃, HCl, H₂SO₄ or mixtures thereof; and/or
ii) the acid-washing step is performed at temperatures ranging between 0 and 100 C; and/or
iii) the duration of the acid-washing ranges between 5 minutes and 100 hours; and/or
iv) the acid-washed powder is recovered by filtration; and/or
v) the acid-washed powder is recovered by centrifugation; and/or
vi) the recovered, acid-washed powder is further washed with water until the washing solution has a neutral pH; and/or
vii) the acid- and water-washed powder is dried in a furnace at ≈ 80 C; and/or
viii) the heat-treated and dried powder is submitted to a second heat treatment; and/or
ix) the second heat treatment step is performed at a temperature between 500 and 1100 C; and/or
x) the second heat treatment step is performed under an atmosphere of Ar, N₂, NH₃, H₂, CO₂, or mixtures thereof.

Further, a membrane electrode assembly with a cathode including a non-noble metal oxygen reduction catalyst prepared by the method according any of the preceding features above comprises:
(a) mechanically mixing a non-porous porosity-precursor with a nitrogen- and carbon-precursor as well as a metal-precursor;
(b) heating the resulting mixture at a temperature between 500 and 1100 °C;
(c) acid-washing this heat-treated powder;
(d) washing with water and drying the resulting solid;
(e) submitting the resulting powder to a second heat treatment between 500 and 1100 °C;
(f) combining this final product with a solution including a proton- or anion-conduction ionomer.

Preferred embodiments of the present invention are described hereinafter in more detail with reference to the following drawings which depict in:

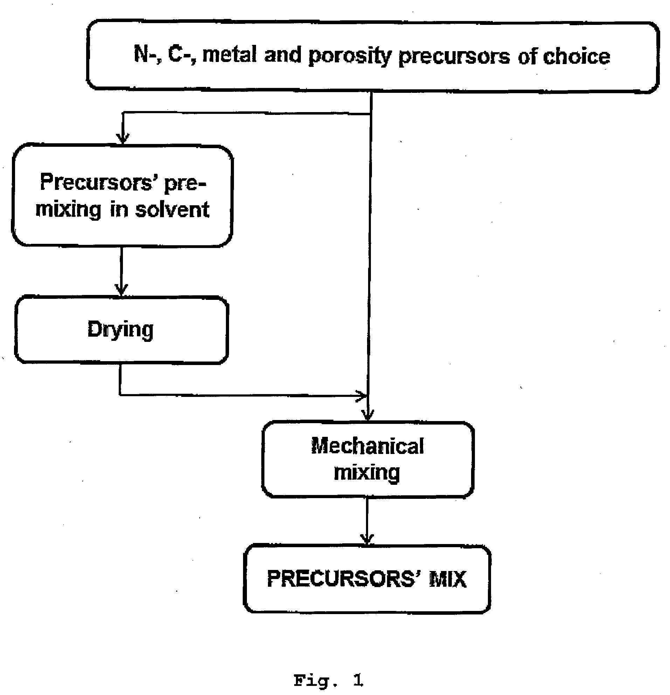

- Figure 1: a schematic representation of the precursors' mixing process, whereby nitrogen-, carbon-, metal- and porosity-precursors are mechanically blended and, accessorily, pre-mixed in a solvent solution;

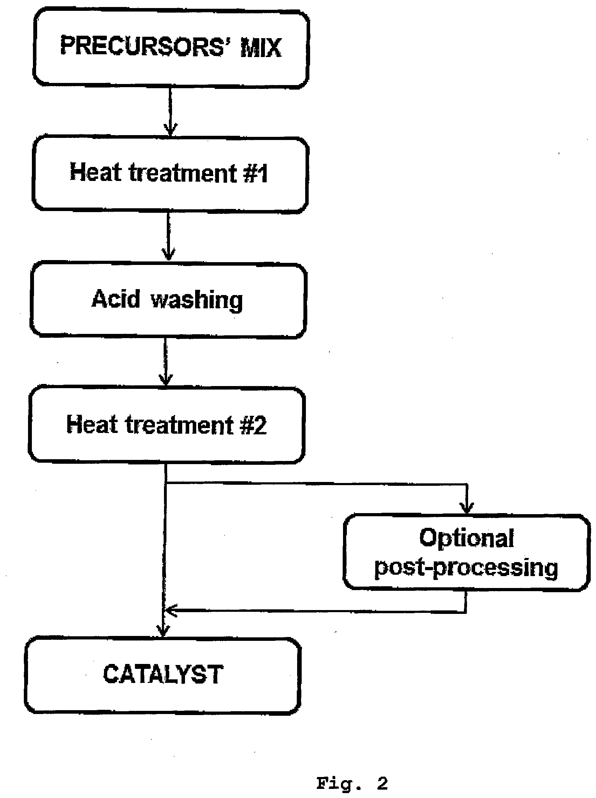

- Figure 2: a scheme of the main steps involved in the catalysts synthesis, whereby the precursors' mix resulting from the blending steps outlined in Figure 1 is submitted to a first heat treatment step, acid washed, and submitted to a second heat treatment step; optionally, other post-processing steps of this twice-heat-treated powder can be envisaged for obtaining the final catalyst;

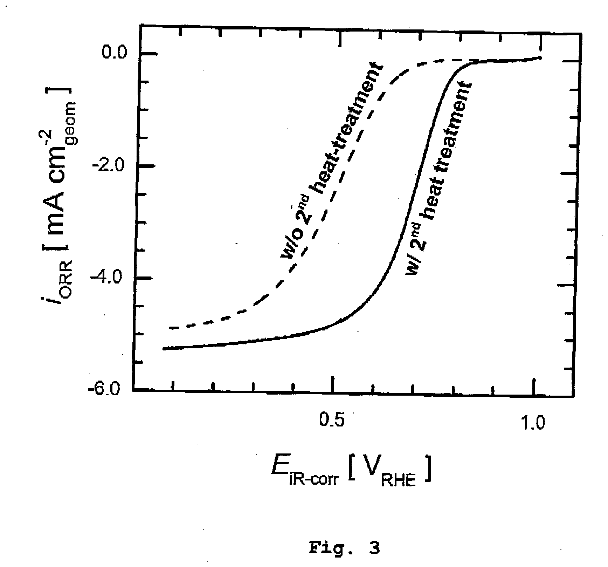

- Figure 3: the iR- and capacitively-corrected RDE-voltammetry polarization curves (C₂-saturated 0.1 M HClO₄, 1,600 rpm, 5 mV·s⁻¹, 500 µg_{NNMC}·cm⁻²) of an NNMC prepared with an initial Fe-content of 0.1 wt. % and an initial Na₂CO₃:PAN ratio of 3:1, submitted to a first heat-treatment step of 30 min in N₂ at 750 °C and acid washed (dashed line), or additionally submitted to a second heat treatment step of 1 h in 5 % H₂ in Ar at 950 °C (solid line);

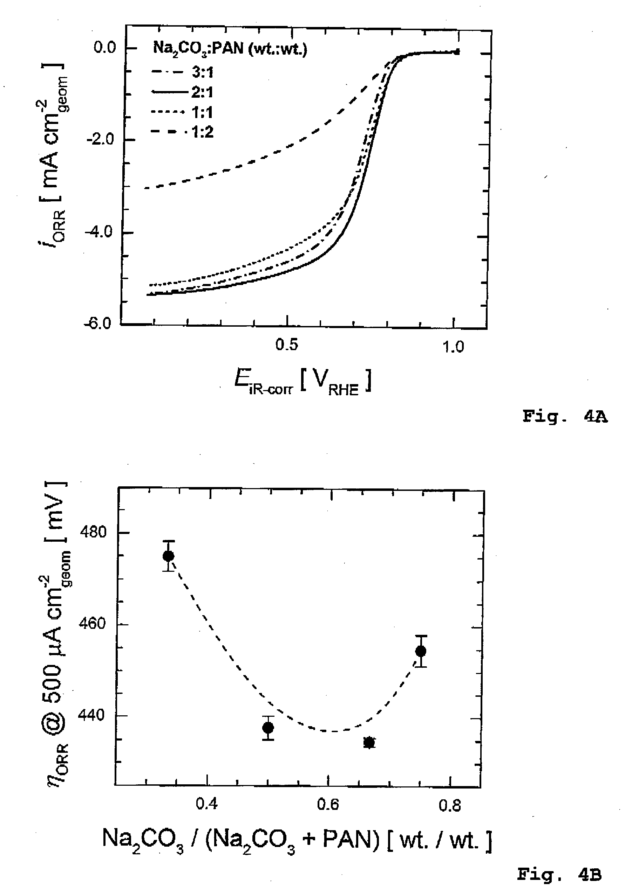

- Figure 4: iR- and capacitively-corrected RDE-voltammetry polarization curves (O₂-saturated 0.1 M HClO₄, 1,600 rpm, 5 mV·s⁻¹, 500 µg_{NNMC}·cm⁻²) of NNMCs prepared with an initial Fe-content of 0.1 wt. % and initial Na₂CO₃:PAN ratios between 3:1 and 1:2 (weight:weight), heat treated for 30 min at 750 °C, acid washed and dried, and heat treated again for 1 h at 950 °C. Figure 4B summarizes the ORR-activities of these same samples (average of three measurements), expressed as the overpotential required to reach a current of 500 µA·cm⁻² (assuming an equilibrium potential of 1.23 V vs. RHE);

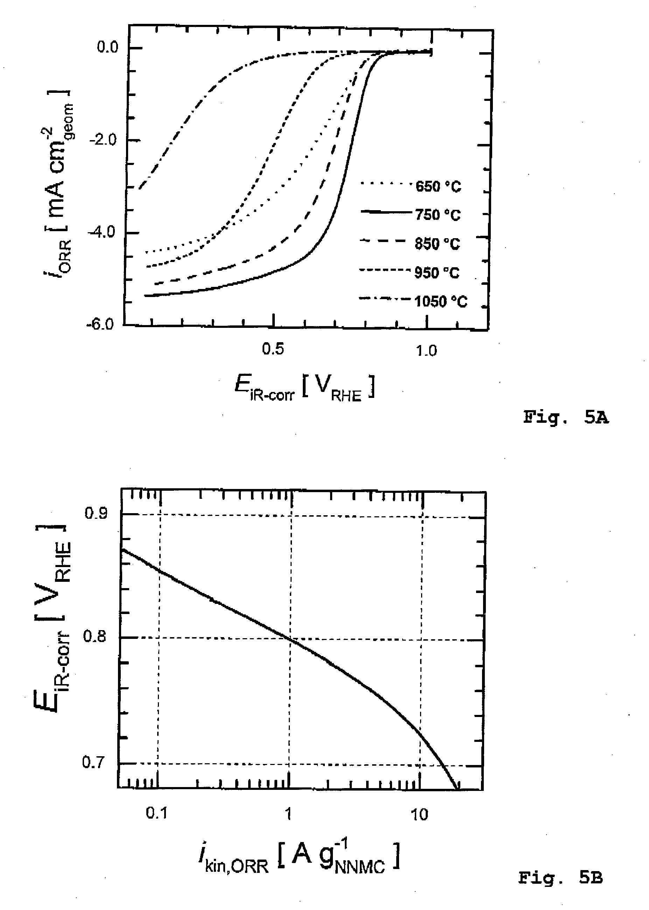

- Figure 5: iR- and capacitively-corrected RDE-voltammetry polarization curves (Fig. 5A: O₂-saturated 0.1 M HClO₄, 1,600 rpm, 5 mV·s⁻¹, 500 µg_{NNMC}·cm⁻²) of NNMCs prepared with an initial Fe-content of 0.1 wt. % and initial Na₂CO₃:PAN ratio of 2:1 (weight:weight), heat treated for 30 min at tempetatures between 650 and 1050 °C, acid washed and dried, and heat treated again for 1 h at 950 °C; Fig.5B showcases the ORR Tafel-plot (i.e., potential vs. log of the kinetic current) for the most ORR-active catalyst, prepared using a temperature of 750 °C in the first heat treatment step;

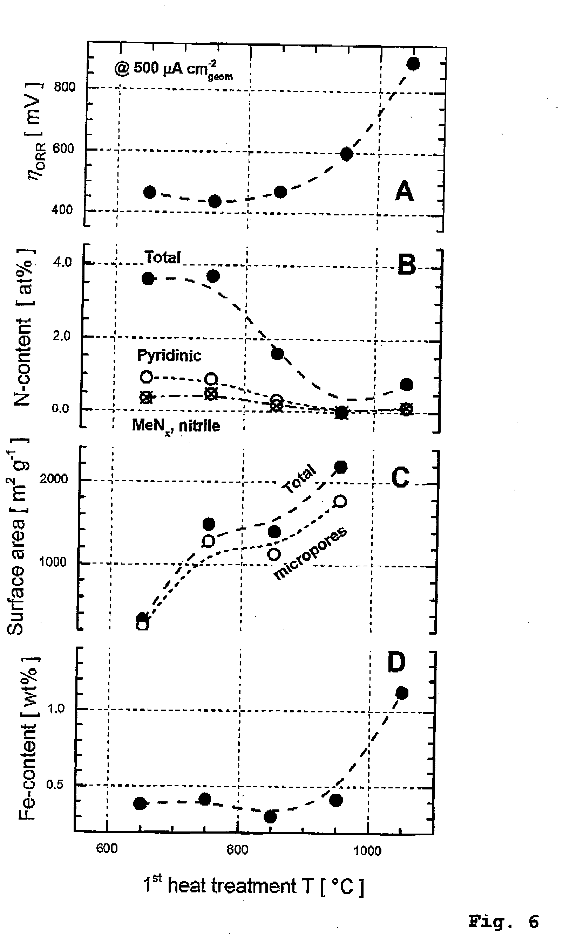

- Figure 6: the effect of the temperature of the first heat treatment step on the ORR-activity, surface N-content, surface area and Fe-content of the final catalysts in Fig. 5A (i.e., additionally acid washed and submitted to a second heat treatment step of 1 h at 950 °C). Note that the partial pyridinic and MeNₓ/nitrile N-contents in Fig. 6B were quantified from the deconvolution of the N1s spectra, and that the microporosity was derived from the catalysts' pore size distribution, in terms determined using the quenched solid density functional theory algorithm to analyze the N₂-sorption isotherms, assuming a slit-like pore geometry;

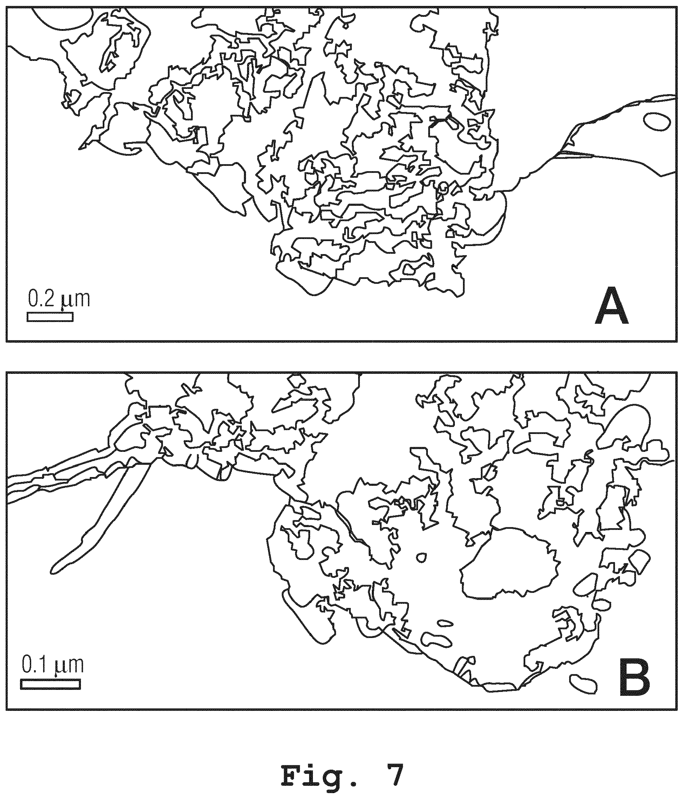

- Figure 7: transmission electron micrographs of the catalysts prepared using temperatures of 650 and 750 °C in the first heat treatment step, respectively (with an initial Fe-content of 0.1 wt. %, an Na₂CO₃:PAN ratio of 2:1, and acid washed and heat treated again - 1h at 950 °C, 5 % H₂ in Ar - after the first heat treatment); and

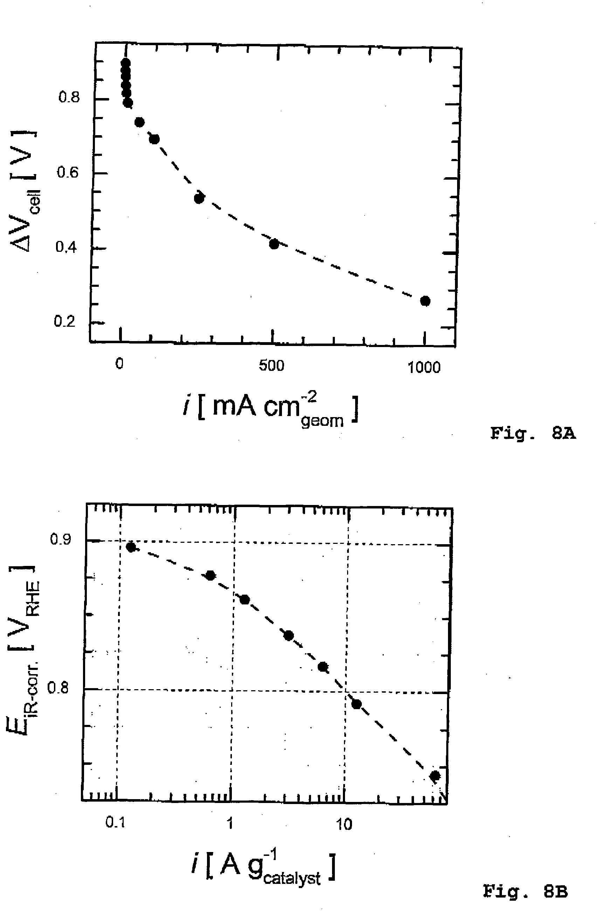

- Figure 8: the differential fuel cell polarization curve recorded using a non-noble metal catalyst with an initial Fe-content of 0.1 wt. %, an Na₂CO₃:PAN ratio of 2:1, heat treated for 30 min at 750 °C (N₂), acid washed and heat treated again for 1h at 950 °C (5 % H₂ in Ar) at the fuel cell cathode; the catalyst cathode loading was 0.8 mg·cm⁻², and the cell was operated at 80 °C, with 1.5 bar_{abs} H₂ and O₂ at 100 % relative humidity as the anode and cathode feeds and gas flows allowing for reactant stoichiometries > 30; Fig. 8B displays the corresponding Tafel plot in the high potential / low current region where fuel cell performance is exclusively determined by the catalyst's ORR-activity.

In the current document, a "catalyst" is a material that accelerates the kinetics of a chemical reaction without getting depleted by the latter. Specifically, "non-noble metal catalysts" (NNMCs) are catalysts that do not contain any noble metal, whereby the latter may comprise Pt, Pd, Au, Rh, Ir, Ru, Os or Ag.

Additionally, a "catalyst precursor" refers to a material that contains one or more of the elements needed for the preparation of a non-noble metal catalyst, or that leads to this required feature(s) due to its transformation along the steps involved in the catalyst's synthesis. In this regard, the properties generally acknowledged as needed for a non-noble metal catalyst are a carbon support, its corresponding (micro)porosity and surface nitrogen functionalities, and the presence of a non-noble transition metal.

The need for these components stems from the structure of the catalytic sites (i.e., those on which the ORR takes place) in these non-noble metal catalysts; for iron-based NNMCs, these are generally believed to consist of molecular centers in which iron (in a 2+ oxidation state) is four-fold coordinated by pyridine-like nitrogen functionalities hosted at the edges of the carbon support's micropores.

Thus, the current invention presents a novel NNMC-synthesis approach in which a non-porous material is used as the porosity precursor. To this end, the latter precursor comprises a thermally decomposable compound that releases gas during the first heat treatment step of the NNMC's synthesis, producing a porous material. Therefore, chemicals envisaged for this purpose include (but are not limited to) (bi) carbonates and (bi) oxalates (Meₓ(H)CO₃, Meₓ(H)C₂O₄, whereby x = 1 or 2), which upon heating release CO₂ (and CO) and yield a solid oxide cf the complementing metal cation included in their original formulation (Me₂O and/or MeO).

As for the precursor needed for the carbon support, this comprises an organic compound, monomer or polymer (or combinations thereof) that partially decomposes and recombines during the NNMC's synthesis heat treatment steps, as to yield graphene-like 2D and 3D structures (i.e., platelets, tubes) similar to those observed in carbon blacks or nanotubes. Moreover, these carbon precursors might contain N-functionalities, therefore additionally acting as N-precursors (although this is not a formal requirement). Thus, compounds envisaged for this task include (but are not limited to) polyacrylonitrile, polyaniline, cyanamide, phenanthroline, or melamine.

Regarding the metal (Me) precursor, this comprises a salt, oxide or macrocyclic compound (or combination thereof) in which the metal(s) of interest may be in the oxidation state preferred for the catalytic function (e.g., for Fe-based NNMCs the metal is preferably in the Fe²⁺ form), although others can also be considered. In order to maximize the dispersion of this (these) precursor(s) and thus the chances to form the molecularly-isolated, ORR-active Me-N₄ sites described above (instead of yielding aggregate side phases, which are generally regarded as ORR-inactive), preferred compounds (yet not limited to these) are those in which the metal is pre-coordinated by N-groups (e.g., porphyrins, phthalocyanines and Me-phenanthroline complexes) and/or salts which are soluble in the solvent(s) chosen for the precursors' mixing step (if applicable, cf. below).

Because of this need to enhance the metal dispersion as to minimize aggregation, the initial procedure applied to mix all precursors is of great importance to the catalyst's preparation and final features. Chiefly, this mixing will also affect other key features like the catalyst's (micro)porosity and morphology, which in terms affect the NNMC's site density and reactant/product transport properties, respectively.

Specifically, the latter morphological features and corresponding transport properties shall determine the catalyst's fuel cell performance at the high current densities required for maximum power output (relevant, e.g., in automotive applications).

To illustrate the possibilities in this important initial step, Figure 1 schematizes the two main routes that can be followed to mix the precursors. In the first approach, the precursors are first dispersed and/or dissolved in a solvent or mixture of solvents, stirred and recovered by evaporation of the liquid phase. After complete drying of the resulting precursor mixture, the resulting solid is additionally blended using a mechanical step, e.g., ball milling of different intensities (and with or without solvent, whereby the latter case would imply the need for the drying of the mixture). In the second approach, the initial mixing through solvents is overlooked, and all precursors are mechanically mixed directly.

Additional parameters to be considered in this mixing are the proportions of the different precursors and the initial metal content; combined with the conditions of choice for the subsequent synthesis steps, these variables will determine the catalysts' (micro)porous-, nitrogen- and metal-concentrations, as well as their overall composition, site density and catalytic performance. The ratio between porosity- and carbon-precursor shall be between 90:10 and 10:90 (weight:weight), and preferably between 70:30 and 30:70. As for the metal content, while too little metal shall lead to a low number of sites (i.e., a poor ORR-activity), too much metal shall result in excessive agglomeration into side-phases and a lower performance. Thus, the initial metal content on the basis of all precursors' masses shall vary between 0.01 and 10 wt. %, and preferably be between 0.1 and 5 wt. %.

Following this mixing, the subsequent steps involved in the catalysts synthesis are schematized in Figure 2. The dry precursor mixture is initially submitted to a first heat treatment step in which the porosity precursor decomposes to release gas and (in combination with the carbonization of the remaining precursors) yields a high surface area, carbon-based material. This first heat treatment step is to be performed at temperatures ranging between 500 and 1100°C (and, preferably, between 650 and 850°C), and for durations between 5 min and 10 hours (whereby 10-60 min is preferred). Additionally, this step can be performed in an inert atmosphere (e.g., with Ar or N₂ gases), in a reducing environment (H₂) or using NH₃, which acts as an additional porosity-inducing agent (due to its capacity to etch the carbon support) and N-precursor.

After this first step, the resulting solid powder is to be washed with acid, as to remove any soluble, metal side phases and the oxides derived from the thermal decomposition of the porosity precursor (see discussion above). This acid washing can be performed using a variety of acids (e.g., HClO₄, HNO₃, HCl or H₂SO₄) and concentrations (e.g., 0.01 to 5 M), applying various durations, and even different temperatures. In this last respect, the use of a heated HNO₃ solution (e.g., at 60 C) may lead to further etching of the carbon support, possibly increasing its porosity and aiding to release Fe-agglomerates encapsulated in a carbon shell (see 'Examples' below). This acid washing step is finalized by recovering the solid product (e.g., through filtration of centrifugation), washing it with water until the pH of the washing solution is neutral, and drying the resulting powder.

Finally, the third step of the synthesis comprises to submit the dry, acid-washed material to a second heat treatment, which is typically performed at temperatures greater than those used in the first heat treatment step (e.g., at 80C to 1000 °C). While this second heat treatment is not compulsory to obtain an ORR-active material, it has been observed that it does lead to a significant increase of activity when compared to the acid-washed, non-heat-treated powder (as depicted in Figure 3). As in the above case, this heat treatment can be performed in an inert atmosphere (e.g., with Ar or N₂ gases), a reducing environment (H₂) or using NH₃ as a porosity- and N-precursor.

Accessorily, the catalyst resulting from these three steps can undergo further modifications aiming at the tuning of its porosity and morphological features, as to improve its mass transport properties when processed into a fuel cell catalyst layer. Specifically, such modifications could imply the tuning of the NNMC particle size using mechanical processing tools like ball milling, and/or the addition to the catalyst ink of soluble chemicals that may increase the catalyst layer's porosizy.

### EXAMPLES

### Example 1

### Effect of the porosity-to-carbon-precursors' ratio

Following the above explanations and the scheme in Figure 1, Na₂CO₃, polyacrylonitrile (PAN) and a Fe²⁺-phenanthroline complex are chosen as the porosity-, N-/C-, and metal-precursors, respectively. The initial metal content of this precursors' mixture is set to a value of 0.1 wt. % Fe (on the basis of all precursors' masses), and Na₂CO₃:PAN weight ratios between 3:1 and 1:2 are investigated.

In a first step, the required masses of Na₂CO₃ and PAN are dispersed separately in dimethylformamide (DMF), whereby the resulting suspensions are left stirring overnight at ≈ 80 °C. In a separate vial, the Fe²⁺⁻phenanthroline complex is formed by mixing in ≈ 20 mL of DMF the required mass of iron (in the form of Fe²⁺-acetate) along with the mass of phenanthroline (phen) needed for an Fe:phen molar ratio of 1:5. Once a dark-red solution is formed, the contents of all three containers (i.e., DMF-based solutions / dispersions of Na₂CO₃, PAN and Fe-phen) are mixed together and left to stir at ≈ 80°C for another three hours. After this, the volume of the resulting dispersion is decreased until a muddy mixture is obtained, and the latter is left to dry overnight in a furnace at ≈ 120 C. The resulting solid is then ground with a pestle and transferred to a ZrO₂ jar for planetary ball milling. Typically, ≈ 2.5 g of precursor mixture are placed alongside 15 ZrO₂ balls (5 mm in diameter), and milled for 80 min at 300 rpm.

In the subsequent, heat-treatment step, a fraction of this precursor mixture is heat treated for 30 min at 750 °C under a N₂ atmosphere. For this, the ball milled powder is weighed and transferred to an alumina crucible that is then placed inside a quartz tube at the center of a heating furnace. The temperature is first ramped (at 5 °C·min⁻¹) to 150 °C, held for three hours, then ramped again to 750 °C. After thirty minutes, heating is halted and the furnace is left to cool down through natural convection.

The resulting powder is then ground and acid-washed overnight in a 0.1 M solution of HClO₄ in water at room temperature. A given mass of heat-treated powder ("X", in mg) is first weighed and ultrasonically dispersed in a ≈ X/2 volume (in mL) of acid solution. After ca. five minutes, the resulting dispersion is transferred from the ultrasonication bath to a stirring plate where it is left mixing overnight. The remaining powder is then recovered by vacuum-filtration, abundantly washed with water until the pH of the washing solution is neutral, and dried at ≈ 100 °C.

The resulting, acid-washed material is then submitted to a second heat treatment step that improves its catalytic activity (see Figure 3, for the catalyst made using a Na₂CO₃:PAN ratio of 3:1). The latter heat treatment is similar to the first step described above, with the exception that the sample is heated to 950 °C for one hour, and that the heating atmosphere is a reducing mixture of H₂ in Ar (5% vol.).

The ORR-activity of the resulting, final catalysts is electrochemically determined using rotating disc electrode (RDE) voltammetry in 0.1 M HClO₄ and at room temperature. For this purpose, inks of each catalyst are prepared by dispersing a given amount of powder in a 3:1 volume mixture of water and isopropanol, and adding the volume of a recast Nafion solution required for a Nafion-to-catalys mass ratio cf 0.3. Following ultrasonication of this ink, the volume of it required for a loading of 500 µg_{NNMC}·cm⁻² is dropcasted atop the glassy carbon disc of a PTFE-embedded RDE. After drying, the loaded RDE is mounted on a rotator shaft and immersed in a three-electrode electrochemical cell containing the O₂-saturated electrolyte, along with an Au-mesh as the counterelectrode and a custom-made reversible hydrogen electrode as the reference. The electrode is then voltammetrically conditioned by recording 25 cyclic voltamogramms (CVs) between 0.05 and 1.0 V vs. RHE at 50 mV·s⁻¹. Next, three ORR polarization curves are recorded rotating the electrode at 1,600 rpm and with a scan rate of 5 mV·s⁻¹. The electrolyte is then saturated with N₂ as to record baseline CVs (for subsequent capacitive correction) under the same conditions. Finally, the high frequency resistance (needed to correct the polarization curves for resistive effects) is determined using potentiostatic electrochemical impedance spectroscopy at 0.45 V vs. RHE, applying a 5 mV perturbation between 200 kHz and 1 Hz.

Figure 4A displays the polarization curves obtained for catalysts prepared using initial Na₂CO₃:PAN ratios between 3:1 and 1:2 (mass:mass). Considering the average overpotentials (on the basis of three measurements) needed to reach a current of 500 µA·cm⁻², plotted in Figure 4B, the NNMCs with the best ORR-activities (i.e., with the lowest overpotentials) are obtained using ratios of 2:1 and 1:1.

### Example 2

### Effect of the temperature of the first heat treatment step

In an effort to better understand the results in Example 1, NNMCs with a fixed Na₂CO₃:PAN ratio of 2:1 were synthesized to study the effect of the temperature of the first heat treatment step on their ORR-activity and physico-chemical features. For the latter purpose, catalysts submitted to all steps in Figure 2 were characterized using X-ray photoelectron spectroscopy to determine their surface chemical composition, N₂-porosimetry to estimate their surface area and pore size distribution, and inductively coupled plasma optical emission spectrometry to quantify their metal content. For XPS, small amounts of sample were pressed on adhesive Cu-tape stuck to a sample holder and step-wise transferred into an ultra-high-vacuum analysis chamber. Samples were analyzed using monochromatized Al Kα radiation (1,486.7 ev); following the recording of survey scans, numerous narrow scans were obtained at the C1, O1s and N1s energy regions, whereby the latter were subsequently deconvoluted. For the N₂-sorption tests, weighed amounts of catalyst were transferred into a calibrated volume glass tube and outgassed overnight at 200 °C. The tube was then transferred to the sorption-measurement machine, whereby N₂-adsortption and -desorption branches were recorded (77 K, 40-points each) in the P/P₀ range of 0.02 to 0.95. Total surface areas were derived applying the Brunnauer-Emmett-Teller equation (adsorption branch) in the P/P₀ range between 0.05 and 0.25, and pore size distributions were quantified using the quenched solid density functional theory, assuming slit-like pore geometries. For ICP-OES, weighed amounts of NNMC were digested in HNO₃ - HCl mixtures, and the resulting solution was diluted in ultrapure water prior to analysis. Additionally, transmission electron microscopy (TEM) was used to determine the compositional and morphological features of selected samples.

Figure 5A displays the ORR polarization curves recorded for the NNMCs as a function of the heat treatment temperature, whereby the best-performing catalyst is the one prepared at 750 °C. Specifically, when its ORR-activity is plotted in the form of a so-called Tafel plot (i.e., displaying the potential vs. the logarithm of the kinetically-controlled current, see Figure 5B), this catalysts reaches an ORR-activity of ≈ 1 A·g⁻¹ at 0.8 V vs. RHE.

Figures 6A, 6B, 6C and 6D display the relation between the first heat treatment temperature and the ORR-overpotential (averaged on the basis of three measurements), surface N-content, (micro)porosity and Fe-concentration, respectively. Interestingly, neither of these three physico-chemical variables displays an univocal relation with the ORR-activity, implying that none of them is the sole limiting factor determining the catalysts' performance.

To clarify this behavior, the NNMCs prepared using first heat treatment temperatures of 650 and 750 °C were characterized using TEM. As shown in Figure 7A (illustrative of our observations in other locations), the catalyst prepared at 650 °C exclusively consists of a carbon-based phase with alveolar structure, whereas in the case of the 750 °C sample (Figure 7B) metal nanoparticles encapsulated in a carbon-shell were also discernible. Thus, differences in the synthesis conditions unambiguously lead to fine changes in the catalysts' composition that in terms affect the NNMCs' ORR-activity.

### Example 3

### Fuel cell application of an NNMC prepared using this novel synthesis approach

Following on the previous Examples, the catalyst synthesized with a Na₂CO₃:PAN ratio of 2:1, an initial Fe-content of 0.1 wt.% and using a first heat treatment temperature of 750 °C was selected for PEFC testing in a 1 cm² "differential" cell in which mass transport losses due to limitations in reactants' supply can be neglected. For this purpose, a weighed mass of catalyst was processed into an ink containing water, isopropanol and the amount of recast Nafion solution required for a Nafion-to-catalyst ratio of 1:1 (weight:weight). Following sonication of the ink, it was spray-coated on a piece on Nafion XL-100 membrane confined inside a frame as to expose an active area of 1 cm². After drying, the resulting catalyst-coated membrane (CCM) was weighed, and the NNMC loading was estimated to be 0.8 mg·cm⁻². The CCM was then hotpressed at 120 C and 1 bar·cm⁻² for 5 minutes with a gas diffusion layer (GDL 25 BC, Sigracet) and a commercial gas diffusion electrode (0.4 mg_{Pt}·cm⁻² HISPEC 9100 Pt/HAS [Johnson Matthey] on Sigracet GDL 25 BC) on cathode and anode, respectively. The resulting membrane electrode assembly was mounted in the differential fuel cell with a compression of ≈ 20 %, and pure H₂ and O₂ at flows > 30-fold above stoichiometry needs, with 100 % relative humidity and 1.5 bar_{abs} were circulated through anode and cathode, respectively. The cell was then heated to 80 °C and a polarization curve was recorded in galvanostatic increments, holding each current for three minutes at each value and taking the average of the last two minutes as representative of the cell performance. The high frequency resistance at each current was additionally determined after each galvanostatic step using electrochemical impedance spectroscopy.

Figure 8A displays the polarization curve recorded using this membrane electrode assembly (MEA), which reaches a current density of ≈ 200 mA·cm⁻² at an application-relevant potential of 0.6 V (i.e., for a power output of ≈ 120 mW·cm⁻²). Additionally, in the high-potential regime (cf. Figure 8B), the catalyst reaches a mass-specific current density of ≈ 10 mA·g⁻¹ at 0.8 V vs. RHE, which is ≈ 10-fold larger than the value observed in RDE-measurements (see Figure 5C and discussion above) - an improvement that has been previously reported in the NNMC-literature, and that can be tentatively assigned to the poorer utilization of the NNMC catalyst layer in RDE experiments in aqueous environment vs. fuel cell measurements in which the fed reactants can better access the active sites embedded in the catalysts' micropores.

## Claims

1. A method for producing an oxygen reduction catalyst, comprising the steps of:
a) mixing an initially non-porous porosity-precursor, a carbon- and nitrogen precursor, and a non-noble metal-precursor;
b) heat-treating the resulting precursor mixture to obtain a heat-treated product;
c) acid-washing and drying the resulting, heat-treated product;
d) submitting the resulting, acid washed and dried product to a second heat-treatment step.

2. The method of claim 1, wherein the non-porous porosity precursor has an initial surface area < 10 m²·g⁻¹.

3. The method of claim 1 or 2, wherein the non-porous porosity precursor is a thermally decomposable, gas-releasing carbonate or oxalate salt.

4. The method of any of the preceding claims, wherein the carbon and nitrogen precursor is (are) one (or more) among polyacrylonitrile, polyaniline, cyanamide, phenanthroline, or melamine.

5. The method of any of the preceding claims, wherein the metal is (are) one (or more) among iron, cobalt, nickel, chromium, copper or manganese.

6. The method of any of the preceding claims, wherein the metal(s) is (are) delivered in the form of an acetate, oxalate, oxide, sulfate, porphyrin, phthalocyanine, or metal-phenanthroline complex.

7. The method of any of the preceding claims, wherein the precursors are mechanically blended to yield a precursor mixture.

8. The method of any of the preceding claims, wherein the means of mechanical blending comprise using planetary ball milling.

9. The method of claims 7 or 8, wherein this mechanical blending step is preceded by the mixing of the precursors in liquid phase.

10. The method of claim 9, wherein the solvent used for this purpose is (are) one (or more) among water, ethanol, methanol, n-propanol, acetone, dimethylformamide or dimethysulfoxide.

11. The method of any of the preceding claims, wherein the porosity- and carbon- / nitrogen-precursors are mixed in initial mass ratios ranging between 90-to-10 and 10-to-90.

12. The method of any of the preceding claims, wherein the metal content of the initial precursors' mixture is within the range of 0.01 to 10 wt. %.

13. The method of any of the preceding claims, wherein the first heat treatment step is performed at a temperature between 500 and 1100 °C.

14. The method of any of the preceding claims, wherein the first heat treatment step is performed under an atmosphere of Ar, N₂, NH₃, H₂, CO₂, or mixtures thereof.

15. A membrane electrode assembly and fuel cell with a cathode including a non-noble metal oxygen reduction catalyst prepared by the method according any of the preceding claims, comprising:
(a) mechanically mixing a non-porous porosity-precursor with a nitrogen- and carbon-precursor as wells as a metal-precursor;
(b) heating the resulting mixture at a temperature between 500 and 1100 °C;
(c) acid-washing this heat-treated powder;
(d) washing with water and drying the resulting solid;
(e) submitting the resulting powder to a second heat treatment between 500 and 1100 °C;
(f) combining this final product with a solution including a proton- or anion-conduction ionomer.
